Europäisches Patentamt

European Patent Office

Office européen des brevets

(19)

(11) Numéro de publication: **0 038 293**
**B1**

(12)
# FASCICULE DE BREVET EUROPEEN

(45) Date de publication du fascicule du brevet:
**21.09.83**

(51) Int. Cl.³: **B 27 G 1/00**

(21) Numéro de dépôt: **81810094.3**

(22) Date de dépôt: **13.03.81**

(54) **Procédé de fixation des noeuds d'une planche et planche avec noeuds fixés.**

(30) Priorité: **14.04.80 CH 2847/80**

(43) Date de publication de la demande:
**21.10.81 Bulletin 81/42**

(45) Mention de la délivrance du brevet:
**21.09.83 Bulletin 83/38**

(84) Etats contractants désignés:
**AT BE CH DE FR IT LI NL SE**

(56) Documents cités:
**CH-A-610 540**
**NL-A-6 615 708**
**US-A-1 560 179**
**US-A-2 035 817**
**US-A-2 377 169**
**US-A-2 392 751**
**US-A-2 675 837**
**US-A-2 918 705**

(73) Titulaire: **Mivelaz, Louis, CH-1724 Praroman-Le Mouret (CH)**

(72) Inventeur: **Mivelaz, Louis, CH-1724 Praroman-Le Mouret (CH)**

(74) Mandataire: **Steiner, Martin, c/o AMMANN PATENTANWAELTE AG BERN Schwarztorstrasse 31, CH-3001 Bern (CH)**

# Procédé de fixation des nœuds d'une planche et planche avec nœuds fixés

L'invention concerne un procédé de fixation d'un nœud d'une planche.

En menuiserie, il est bien connu que les nœuds du bois posent des problèmes lors des opérations de sciage ou de rabotage des planches, par le fait qu'ils ont facilement tendance à se détacher du bois et à tomber.

Une méthode connue pour remédier au défaut ci-desus consiste à effectuer dans la planche une opération de bouchonnage, c'est-à-dire à remplacer le nœud qui s'est détaché par un bouchon de bois sain. Le trou laissé par le nœud est d'abord agrandi, puis le bouchon est introduit et collé. Un tel procédé est cependant peu économique en raison du nombre d'opérations qu'il exige, y compris le temps relativement long de séchage de la colle, et la présence des bouchons dans la planche est moins esthétique que celle des nœuds originels.

Il est aussi possible de remplacer le nœud tombé par un bout de nœud collé, sous la forme d'une pièce rapportée. Le résultat est cependant inesthétique et il existe toujours des risques que la pièce rapportée se détache lors du rabotage ultérieur des planches.

On connaît par le brevet US No 2035817 un élément métallique à enfoncer dans une face frontale d'un tronc d'arbre pour renforcer ce dernier et l'empêcher de se fendre, ou de se fissurer, grâce à l'effet de traction produit par l'élément métallique. Toutefois, un tel élément n'est pas prévu pour fixer les nœuds d'une planche, en général durs et cassants, par le fait qu'il ne comporte pas de dents lui permettant de s'enfoncer dans le nœud et de produire un refoulement latéral de la matière de ce nœud contre la surface latérale de son logement dans la planche, pour augmenter l'adhésion ou la friction entre nœud et planche.

On connaît aussi, par la demande publiée NL No 6615708, un procédé de fixation de planches entre elles à l'aide de clous. Il n'est cependant pas applicable à la fixation des nœuds d'une planche.

Le but de la présente invention est un procédé de fixation des nœuds d'une planche ne présentant pas les inconvénients mentionnés ci-dessus, c'est-à-dire un procédé permettant de fixer de manière sûre, facile, rapide et économique les nœuds originels à la planche.

Pour atteindre ce but, le procédé selon la présente invention est caractérisé en ce qu'une action de déformation mécanique est exercée au moins sur une des faces dudit nœud à la surface de la planche, ladite déformation produisant un refoulement latéral de la matière dudit nœud contre la surface latérale de son logement dans la planche, ladite matière refoulée augmentant l'adhérence entre nœud et planche et contribuant à lier rigidement le nœud à la planche.

Par le fait que la déformation mécanique, sous forme d'empreinte ou de gorge, produite au moins dans le nœud refoule latéralement la matière de ce nœud contre la paroi latérale de son logement dans la planche, la friction et l'adhésion entre nœud et planche sont augmentées, liant rigidement le nœud à la planche. Dans le cas où un élément de liaison mécanique tel qu'un clou ou une agrafe est enfoncé dans le nœud ou entre celui-ci et la planche, la matière du nœud est également refoulée latéralement contre la paroi latérale de son logement, de sorte que, comme dans le cas précédent, le nœud est lié rigidement à la planche. La déformation peut être produite à l'aide d'un outil selon la revendication 18 monté sur un pistolet pneumatique ou électrique. Un tel pistolet est aussi utilisé pour introduire les éléments de liaison mécanique dans le nœud ou entre nœud et planche. Le procédé tel que revendiqué est donc aisé et rapide à mettre en œuvre, ce qui permet sans perte de temps appréciable de fixer par avance tous les nœuds d'une planche avant l'usinage de celle-ci. Dans le cas de l'utilisation d'un élément de liaison mécanique, tel qu'un clou ou une agrafe, cet élément est enfoncé dans le nœud ou entre le nœud et la planche, de manière à laisser derrière lui un vide qui permet d'usiner aussi la face de la planche par laquelle l'élément de liaison a été introduit. Une variante du procédé est décrite dans la revendication 8. En résumé, le procédé selon l'invention est particulièrement favorable pour lier rapidement, facilement, proprement et économiquement les nœuds d'une planche à cette dernière.

L'invention va être décrite ci-dessous à titre d'exemple et à l'aide du dessin dans lequel:

la fig. 1a est une vue de face d'une agrafe susceptible d'être utilisée dans le procédé selon l'invention;

la fig. 1b est une vue de dessus de l'agrafe de la fig. 1a;

la fig. 1c est une vue de côté de l'agrafe de la fig. 1a;

la fig. 2 est une vue de face d'une planche avec nœud fixé selon une première forme d'exécution de l'invention;

la fig. 3 est une vue en coupe selon la ligne III-III de la planche de la fig. 2;

les fig. 4a et 4b sont des vues de face d'une planche avec nœud fixé selon une deuxième forme d'exécution de l'invention;

la fig. 5 est une vue de face d'une planche avec nœud fixé selon une variante de la deuxième forme d'exécution;

les fig. 6a, 6b et 6c sont des vues de face d'une planche avec nœud fixé selon une troisième forme d'exécution de l'invention;

les fig. 7a, 7b et 7c sont des vues de l'outil utilisé dans la troisième forme d'exécution de l'invention;

les fig. 8a et 8b sont des vues de face d'une planche avec nœud fixé selon les fig. 2 et 6;

la fig. 9 est une vue de face d'une planche avec nœud fixé selon les fig. 5 et 6, et

la fig. 10 est une vue de l'outil utilisé pour fixer le nœud de la fig. 8a.

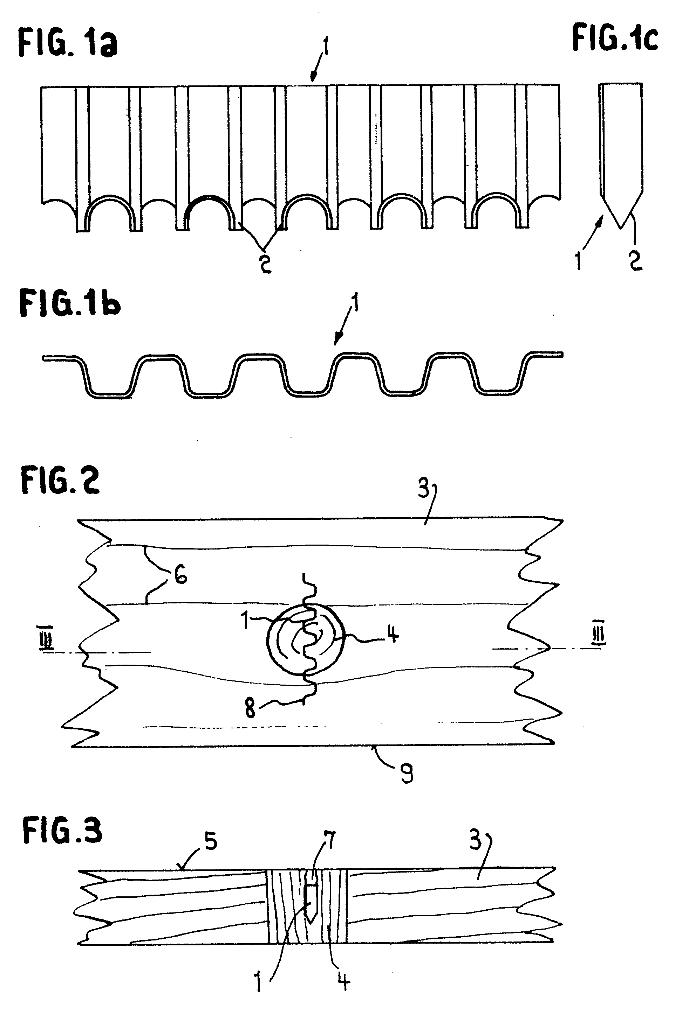

La fig. 1 représente une agrafe 1 d'un modèle connu, susceptible d'être utilisée dans le procédé revendiqué. De telles agrafes s'achètent à relativement bas prix par ensembles comportant chacun une pluralité de pièces et destinés à être utilisés, par exemple, dans un pistolet agrafeur.

On remarque que l'agrafe 1 est ondulée afin de mieux tenir dans le bois et qu'elle comporte des dents 2 facilitant son introduction dans une planche. Pour des raisons qui seront évidentes ci-après, le matériau constituant l'agrafe doit avoir une certaine malléabilité afin de ne pas blesser ou casser le couteau de la raboteuse lors du travail de la planche. En principe, tout matériau, alliage ou combinaison de matériaux présentant les exigences requises de résistance et de malléabilité peut être utilisé pour les agrafes. Le matériau peut être métallique ou non et la combinaison de matériaux peut être mixte, c'est-à-dire combiner un métal avec une matière synthétique par exemple.

La fig. 2 montre une vue de face d'une planche 3 comportant un nœud 4, traversant, qu'il s'agit d'ancrer ou fixer de manière sûre à la planche. Dans ce but, une agrafe telle que 1 est enfoncée dans la planche, par exemple à l'aide d'un pistolet, à l'endroit d'un nœud. Cette opération est effectuée sur la face 5 de la planche qui, dans l'utilisation définitive de cette dernière, n'est pas visible. Comme indiqué dans la figure, l'agrafe 1 est enfoncée dans la planche 3 de manière à traverser le nœud 4 de part en part, ce qui améliore la fixation de celui-ci à la planche. Cette condition n'est toutefois pas absolument impérative et il est aussi possible, si désiré ou nécessaire, de placer l'agrafe de manière qu'elle ne traverse pas le nœud de part en part mais qu'elle soit enfoncée simplement entre la planche et le nœud, à un endroit adéquat.

Il est indiqué de placer l'agrafe perpendiculairement au sens des fibres 6 du bois, afin d'éviter que la planche se fende lors de la pose de l'agrafe. Comme indiqué à la fig. 3, l'agrafe 1 est enfoncée profondément dans la planche et le nœud, de manière à ancrer solidement ce dernier et à laisser derrière elle un vide 7 permettant le rabotage ultérieur de la face 5 de la planche.

Si le nœud 4 est situé à proximité d'un bord 9 de la planche, l'extrémité 8 de l'agrafe se trouvera très près de ce bord et, si celui-ci doit être raboté, il peut arriver qu'au cours de cette opération le couteau de la raboteuse vienne en contact avec l'extrémité de l'agrafe, ce qui risque de le blesser ou même de le casser. C'est donc pour protéger le couteau de la raboteuse que, comme indiqué précédemment, le matériau dont est faite l'agrafe doit avoir de préférence une certaine malléabilité.

Il est évident que dans le principe de la présente invention, tel qu'expliqué ci-dessus, l'agrafe peut avoir d'autres formes d'exécution que celle dont il a été question plus haut. C'est ainsi qu'une agrafe en forme de peigne pourrait aussi être utilisée en lieu et place de celle de la fig. 1.

D'autre part, il est aussi possible d'envisager que la fixation d'un nœud à la planche soit faite non avec une seule et unique agrafe, mais à l'aide d'une pluralité d'agrafes si nécessaire.

Il est aussi possible d'imaginer qu'une gorge soit taillée ou usinée dans la planche à l'endroit d'un nœud, traversant celui-ci de part en part, et qu'une matière synthétique soit injectée dans cette gorge, matière qui après solidification remplacerait l'agrafe 1 de la fig. 2.

Selon une deuxième forme d'exécution de l'invention, l'agrafe 1 peut être remplacée par un élément ou projectile inséré dans le nœud à fixer, ou entre ce nœud et la planche, à l'aide d'un pistolet de travail adéquat.

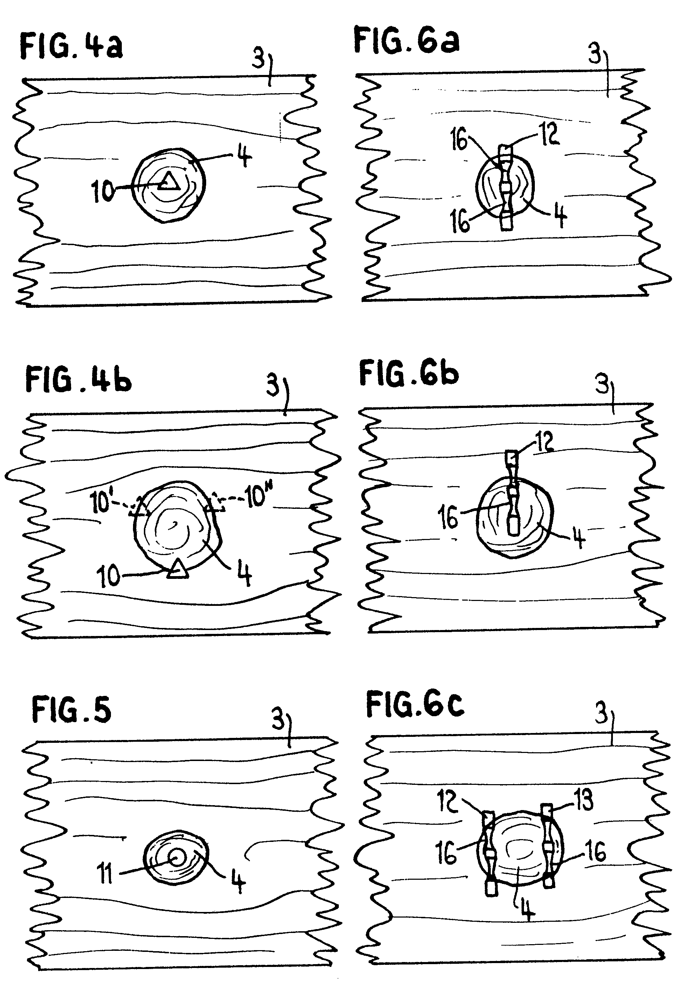

La fig. 4a montre qu'un projectile 10, par exemple de forme triangulaire, est projeté au milieu du nœud 4 à fixer. Ce projectile a de préférence une hauteur de quelques millimètres et, comme l'agrafe 1 de la première forme d'exécution, il est enfoncé dans le nœud de manière à laisser un espace vide derrière lui, entre sa face supérieure et la surface de nœud, afin de permettre le rabotage ou l'usinage ultérieur de la planche sans risque de blesser ou de casser l'outil de coupe. Le projectile, qui peut aussi avoir une forme autre que triangulaire, fixe rigidement le nœud 4 à la planche 3 en raison de l'effet d'écrasement qu'il produit dans ce nœud, serrant fortement celui-ci contre la paroi de son logement dans la planche.

La fig. 4b montre que, si nécessaire, le projectile peut être inséré entre le nœud et la planche et que, si désiré, plusieurs projectiles 10, 10', 10'' peuvent être insérés sur le pourtour du nœud, entre celui-ci et la planche.

La fig. 5 montre que le projectile peut être un clou 11, projeté par le pistolet au milieu du nœud. Comme dans le cas de la fig. 4, le clou 11 produit un effet d'écrasement du nœud 4, liant rigidement celui-ci à la planche 3.

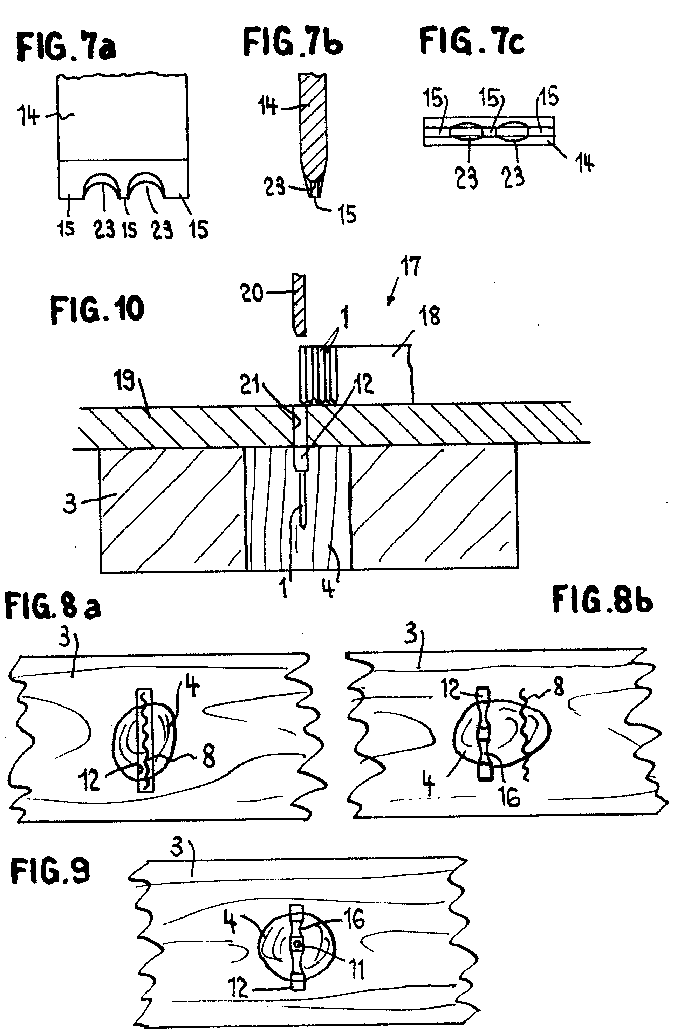

La fig. 6a montre une troisième forme d'exécution de l'invention. Dans ce cas, le pistolet porte un outil plat, de forme allongée et comprenant des dents, comme indiqué en fig. 7. Sous l'action du pistolet, l'outil est projeté entre le nœud 4 et la planche 3, de manière à traverser le nœud de part en part, selon un diamètre de celui-ci. Sous l'impact de cet outil, il se produit à travers le nœud et dans la planche une rainure ou gorge 12 d'une profondeur en rapport avec la grandeur du nœud et l'épaisseur de la planche, produisant un effet d'écrasement du nœud contre la paroi de son logement, liant rigidement le nœud à la planche.

La fig. 6b montre que la gorge 12 peut être produite de manière dissymétrique entre le nœud et la planche, cette gorge ne traversant pas le nœud de part en part lorsque ce dernier se trouve près du bord 9 de la planche 3. La gorge 12 est produite de préférence dans une direction perpendiculaire à celle des fibres du bois, pour éviter de créer des fissures dans la planche.

La fig. 6c montre que, si désiré, une double gorge 12, 13 peut être produite entre le nœud 4 et la planche 3, par exemple lorsque le nœud à fixer est de grande dimension.

Les fig. 7a, 7b et 7c sont des représentations d'un outil permettant de produire la gorge des fig. 6a et 6b. Il est fixé à l'extrémité du pistolet de travail. L'outil se présente sous la forme d'une lame plate en matériau résistant, taillé en pointe et présentant à son extrémité de travail des dents 15 pour faciliter sa pénétration dans le bois. La largeur de l'outil est déterminée en rapport avec la grandeur des nœuds et son épaisseur en rapport avec la largeur de la gorge à produire. Les espaces arrondis 23 entre les dents 15 produisent des ponts 16 (fig. 6a, 6b, 6c, 8b, 9) entre les parois de la gorge 12, ce qui contribue à renforcer la solidité de la planche à l'endroit de cette gorge. Il est évident que d'autres formes d'exécution de l'outil ou des dents de celui-ci sont aussi possibles, en fonction des besoins particuliers.

La fig. 8a montre qu'il est aussi possible de combiner la première et la troisième forme d'exécution de l'invention. Dans ce cas, l'outil est conçu de manière à projeter l'agrafe 1 à travers le nœud 4 dans la planche 3, comme dans la première forme d'exécution, mais en créant simultanément, et dans la même opération, une gorge d'écrasement 12 à travers le nœud et dans la planche, de part et d'autre de celui-ci. L'agrafe 1 est enfoncée suffisamment dans le nœud et dans la planche pour laisser derrière elle un espace vide 7 (fig. 3) permettant l'usinage ultérieur de la planche sans risque de blesser ou de casser l'outil de coupe.

La fig. 8b montre une variante selon laquelle l'agrafe 1 est insérée dans le nœud et la planche, à côté de la gorge 12, à l'aide d'un outil adéquat. L'insertion de l'agrafe 1 et l'écrasement du nœud et de la planche pour former la gorge 12 sont produits simultanément, dans une même opération.

La forme d'exécution de la fig. 8 permet de lier très fortement le nœud à la planche.

La fig. 9 montre une autre variante possible, combinant les deuxième et troisième formes d'exécution de l'invention. Dans ce cas, un clou 11 est enfoncé ou projeté dans le nœud 4, au milieu de la gorge 12. Il est évident que le clou 11 peut aussi être enfoncé dans le nœud à côté de la gorge.

La fig. 10 montre une vue d'un outil permettant de fixer le nœud de la fig. 8a, c'est-à-dire de produire simultanément la gorge 12 et l'apport de l'agrafe 1 dans cette gorge, au cours d'une seule et même opération.

L'outil comprend un magasin d'agrafes 18 monté sur un support 19 muni d'une fente 21. Un poinçon 20, commandé de manière adéquate, enlève une agrafe 1 du magasin 18 et enfonce celle-ci dans le nœud 4 et la planche 3, à travers la fente 21 du support 19. Au cours de cette opération, le poinçon 20, qui peut être plus long que l'agrafe, pénètre aussi dans le bois, écrasant celui-ci de manière à former la gorge 12 d'écrasement au-dessus de l'agrafe, à travers le nœud et la planche.

Le procédé selon l'invention, comme décrit ci-dessus, permet de fixer ou d'ancrer les nœuds des planches de manière facile, rapide et très économique. Il constitue une solution particulièrement intéressante et efficace du problème posé, solution qui élimine entre autres les inconvénients du collage des nœuds.

## Revendications

1. Procédé de fixation des nœuds (4) d'une planche (3), caractérisé en ce qu'une action de déformation mécanique est exercée au moins sur une des faces (5) dudit nœud à la surface de la planche, ladite déformation produisant un refoulement latéral de la matière dudit nœud (4) contre la surface latérale de son logement dans la planche (3), ladite matière refoulée augmentant l'adhérence entre nœud et planche et contribuant à lier rigidement le nœud à la planche.

2. Procédé selon la revendication 1, caractérisé par le fait que tous les nœuds (4) sont liés à ladite planche avant toute opération d'usinage de cette planche.

3. Procédé selon l'une des revendications 1 ou 2, caractérisé par le fait que ladite action est exercée entre ledit nœud (4) et ladite planche (3) et qu'elle produit au moins une gorge (12) d'écrasement entre le nœud et la planche, ladite gorge permettant de lier rigidement le nœud à la planche.

4. Procédé selon l'une des revendications 1 ou 2, caractérisé par le fait que ladite action permet l'apport d'au moins un élément de liaison mécanique (1, 10, 11) dans ledit nœud (4).

5. Procédé selon l'une des revendications 1 ou 2, caractérisé par le fait que ladite action est exercée entre ledit nœud (4) et ladite planche (3) et qu'elle permet l'apport d'au moins un élément de liaison mécanique (1, 10) entre ledit nœud et ladite planche.

6. Procédé selon l'une des revendications 3, 4 ou 5, caractérisé par le fait que ladite action produit simultanément, dans une même opération, ladite gorge (12) et l'apport, au moins dans ledit nœud, dudit élément de liaison mécanique (1, 11), ladite gorge et ledit élément permettant de lier rigidement le nœud (4) à la planche (3).

7. Procédé selon l'une des revendications 4 ou 5, caractérisé par le fait que ledit élément (1, 10, 11) est enfoncé dans ledit nœud (4) et/ou ladite planche (3) en laissant derrière lui un espace vide (7) permettant le rabotage de ladite face (5) de la planche (3).

8. Procédé de fixation des nœuds d'une planche, caractérisé par le fait qu'une action de déformation mécanique produisant une empreinte est exercée entre ledit nœud (4) et ladite planche (3), de la matière synthétique étant injectée dans ladite empreinte comme élément additionnel (1, 10) de liaison mécanique entre nœud et planche.

9. Planche avec nœuds fixés selon le procédé de la revendication 2, caractérisée par le fait que lesdits noeuds (4) sont liés à ladite planche (3) sur une des faces (5) de cette planche qui, dans l'utilisation ultérieure, n'est pas visible.

10. Planche avec nœuds fixés selon le procédé de l'une des revendications 4 ou 5, caractérisée par le fait qu'elle comporte sur au moins une de ses faces (5) un élément de liaison mécanique (1, 10, 11) noyé dans ledit nœud (4), ledit élément contribuant à lier rigidement le nœud à la planche (3).

11. Planche selon la revendication 10, caractérisée par le fait que ledit élément est un clou (11).

12. Planche selon la revendication 10, caractérisée par le fait que ledit élément est une pièce de forme triangulaire (10).

13. Planche selon la revendication 10, caractérisée par le fait que ledit élément est une agrafe (1).

14. Planche selon la revendication 13, caractérisée par le fait que ladite agrafe (1) est en matériau, alliage ou combinaison de matériaux, résistant et malléable.

15. Planche selon la revendication 14 avec nœuds fixés selon le procédé de la revendication 6, caractérisée par le fait que ladite agrafe (1) est noyée dans ladite gorge (12), traverse entièrement ledit nœud (4) et s'étend dans la planche (3) de part et d'autre dudit nœud, ladite agrafe laissant derrière elle un vide (7) par rapport à ladite face (5) de la planche.

16. Planche avec nœuds fixés selon le procédé de la revendication 3, caractérisée par le fait qu'elle comprend au moins un pont (16) entre les parois de ladite gorge (12), ledit pont augmentant la solidité de ladite planche (3) à l'endroit de la gorge.

17. Outil pour la mise en œuvre du procédé selon la revendication 1, caractérisé par le fait qu'il est en forme de lame et que son extrémité de travail porte des dents (15) facilitant la pénétration dudit outil (14) dans le nœud (4) et la planche (3).

18. Outil selon la revendication 17, caractérisé par le fait que les dents (15) se terminent en pointe et qu'elles sont séparées par des espaces (23) créant des ponts (16) entre les parois de ladite gorge (12), lesdits ponts permettant de renforcer ledit nœud (4) et ladite planche (3) à l'endroit de la gorge.

**Ansprüche**

1. Verfahren zur Befestigung von Ästen (4) eines Brettes (3), dadurch gekennzeichnet, dass an der Oberfläche des Brettes auf mindestens eine der Stirnseiten (5) des Astes eine mechanische Verformungseinwirkung ausgeübt wird, welche Verformung eine seitliche Verdrängung des Materials des Astes (4) gegen die Oberfläche des Astloches bewirkt, wobei das seitlich verdrängte Material die Haftung zwischen Ast und Brett erhöht und dazu beiträgt, den Ast starr mit dem Brett zu verbinden.

2. Verfahren nach Anspruch 1, dadurch gekennzeichnet, dass alle Äste (4) vor jeder Bearbeitung des Brettes mit dem genannten Brett verbunden werden.

3. Verfahren nach einem der Ansprüche 1 oder 2, dadurch gekennzeichnet, dass die erwähnte Einwirkung zwischen dem genannten Ast (4) und dem Brett (3) erfolgt, und dass sie mindestens eine Quetschnut (12) zwischen dem Ast und dem Brett erzeugt, welche Nut den Ast starr mit dem Brett zu verbinden gestattet.

4. Verfahren nach einem des Ansprüche 1 oder 2, dadurch gekennzeichnet, dass die genannte Einwirkung mindestens ein mechanisches Verbindungselement (1, 10, 11) in den Ast (4) einzubringen gestattet.

5. Verfahren nach einem des Ansprüche 1 oder 2, dadurch gekennzeichnet, dass die genannte Einwirkung zwischen dem Ast (4) und dem Brett (3) erfolgt, und dass sie mindestens ein mechanisches Verbindungselement (1, 10) zwischen dem Ast und dem Brett einzubringen gestattet.

6. Verfahren nach den Ansprüchen 3, 4 und 5, dadurch gekennzeichnet, dass die genannte Einwirkung zugleich, in ein und demselben Vorgang, die genannte Nut (12) erzeugt und das Einbringen des genannten mechanischen Verbindungselementes (1, 11) mindestens in den Ast bewirkt, welche Nut und welches Element den Ast (4) und das Brett (3) starr miteinander zu verbinden gestatten.

7. Verfahren nach den Ansprüchen 4 oder 5, dadurch gekennzeichnet, dass das genannte Element (1, 10, 11) in den Ast (4) und/oder das Brett (3) hinter sich einen freien Raum belassend eingetrieben wird, was ein Hobeln der genannten Seite (5) des Brettes (3) erlaubt.

8. Verfahren zur Befestigung von Ästen eines Brettes, dadurch gekennzeichnet, dass eine einen Eindruck erzeugende mechanische Einwirkung zwischen dem genannten Ast (4) und dem genannten Brett (3) erfolgt, wobei Kunststoff als zusätzliches mechanisches Verbindungselement (1, 10) zwischen Ast und Brett in den Eindruck eingespritzt wird.

9. Brett mit gemäss dem Verfahren nach Anspruch 2 befestigten Ästen, dadurch gekennzeichnet, dass die Äste (4) auf einer Seite (5) des Brettes (3) mit diesem Brett verbunden sind, welche bei der späteren Verwendung nicht sichtbar ist.

10. Brett mit gemäss dem Verfahren nach einem des Ansprüche 4 oder 5 befestigten Ästen, dadurch gekennzeichnet, dass es an mindestens einer seiner Seiten (5) ein in den genannten Ast (4) eingelassenes mechanisches Verbindungselement (1, 10, 11) aufweist, welches Element dazu beiträgt, den Ast starr mit dem Brett (3) zu verbinden.

11. Brett nach Anspruch 10, dadurch gekennzeichnet, dass das Element ein Nagel (11) ist.

12. Brett nach Anspruch 10, dadurch gekennzeichnet, dass das Element (10) ein Teil dreieckiger Form ist.

13. Brett nach Anspruch 10, dadurch gekennzeichnet, dass das Element eine Klammer (1) ist.

14. Brett nach Anspruch 13, dadurch gekennzeichnet, dass die Klammer (1) aus widerstandsfähigem, formbaren Material, einer Legierung oder einer Kombination von Materialien besteht.

15. Brett nach Anspruch 14, dadurch gekennzeichnet, dass die Klammer (1) in der genannten Nut (12) versenkt ist, den Ast (4) ganz durchsetzt und sich beidseitig des Astes in das Brett (3) erstreckt, welche Klammer hinter sich einen Hohlraum (7) bezüglich der genannten Seite (5) des Brettes belässt.

16. Brett mit gemäss dem Verfahren nach Anspruch 3 befestigten Ästen, dadurch gekennzeichnet, dass es mindestens eine Brücke (16) zwischen den Wänden der erwähnten Nut (12) aufweist, welche Brücke die Festigkeit des Brettes (3) im Bereiche der Nut erhöht.

17. Werkzeug zur Durchführung des Verfahrens nach Anspruch 1, dadurch gekennzeichnet, dass es klingenförmig ist und dass sein Arbeitsende Zähne (15) aufweist, welche des Eindringen des Werkzeugs (14) in den Ast (4) und das Brett (3) erleichtern.

18. Werkzeug nach Anspruch 17, dadurch gekennzeichnet, dass die Zähne (15) in Spitzen enden und dass sie durch zwischen den Wänden der genannten Nut (12) Brücken (16) bildende Lücken (23) voneinander getrennt sind, welche Brücken den Ast (4) und das Brett (3) im Bereiche der Nut zu verstärken erlauben.

**Claims**

1. Method for the fixation of knots (4) in a board (3), characterized in that a mechanical strain action is exerted at least on one of the faces (5) of said knot at the surface of the board, said strain producing a lateral upsetting of the material of said knot (4) against the lateral surface of its housing in the board (3), said upset material increasing the adhesion between knot and board and contributing to bind rigidly the knot to the board.

2. Method according to claim 1, wherein all the knots (4) are bound to said board before any machining operation of this board.

3. Method according to claim 1 or 2, wherein said action is exerted between said knot (4) and said board (3), said action producing at least a crushing groove (12) between the knot and the board, said groove permitting to bind rigidly the knot to the board.

4. Method according to claim 1 or 2, wherein said action permits to insert at least one mechanical bonding element (1, 10, 11) into the knot.

5. Method according to claim 1 or 2, wherein said action is exerted between said knot (4) and said board (3), said action permitting to insert at least one mechanical bonding element (1, 10) between the knot and the board.

6. Method according to claim 3, 4 or 5, wherein said action produces, within one and the same operation, simultaneously said groove (12) and the insertion of said mechanical bonding element (1, 11) at least into said knot, said groove and said element permitting to bind rigidly the knot (4) to the board (3).

7. Method according to claim 4 or 5, wherein said element (1, 10, 11) is driven into said knot (4) and/or said board (3), said driven element leaving behind it an empty space (7) for permitting the planing of said face (5) of the board.

8. Method for the fixation of knots in a board, characterized in that a mechanical strain action producing an impression is exerted between said knot (4) and said board (3), synthetic material being injected into said impression as an additional mechanical bonding element (1, 10) between knot and board.

9. Board with fixed knots in accordance with the method of claim 2, characterized in that said knots (4) are bound to said board (3) on one of the faces (5) of the board which in the subsequent use is not visible.

10. Board with fixed knots in accordance with the method of claim 4 or 5, characterized in that it comprises on at least one of its faces (5) a mechanical bonding element (1, 10, 11) embedded into said knot (4), said element contributing to bind rigidly the knot to the board.

11. Board according to claim 10, wherein said element is a nail (1).

12. Board according to claim 10, wherein said element is a triangular-shaped piece (10).

13. Board according to claim 10, wherein said element is a clamp (1).

14. Board according to claim 13, wherein said clamp (1) is made of resistant malleable material, alloys or combination of materials.

15. Board according to claim 14 with fixed knots according to the method of claim 6, wherein said clamp (1) is embedded in said groove (12), passes entirely through said knot (4) and extends in the board (3) on both sides of said knot, said clamp leaving behind it an empty space (7) with respect to said face (5) of the board.

16. Board with fixed knots in accordance with the method of claim 3, characterized in that it comprises at least a bridge (16) between the walls of said groove (12), said bridge increasing the solidity of said board (3) close to the groove.

17. Tool for implementing the method according to claim 1, characterized in that it is blade-shaped, its working end bearing teeth (15) for facilitating the penetration of said tool (14) in the knot (4) and the board (3).

18. Tool according to claim 17, wherein the teeth (15) taper toward their free ends and are separated by spaces (23) providing bridges (16) between the walls of said groove (12), said bridges reinforcing said knot (4) and said board (3) close to the groove.

**FIG. 1a**

**FIG. 1c**

**FIG.1b**

**FIG.2**

**FIG.3**

FIG.4a

FIG.6a

FIG.4b

FIG.6b

FIG.5

FIG.6c

FIG.7a

FIG.7b

FIG.7c

FIG.10

FIG.8a

FIG.8b

FIG.9